# EUROPEAN PATENT APPLICATION

(11) **EP 4 383 725 A1**
(43) Date of publication of application: **12.06.2024**
(21) Application number: 23215290.0
(22) Date of filing: 08.12.2023
(51) Int. Cl.: H04N 21/234, G06V 20/40, G11B 27/031, H04N 21/44, H04N 21/4402, H04N 21/845, H04N 21/8549

(54) **AUTOMATIC VIDEO EDITING APPARATUS, METHOD AND COMPUTER READABLE RECORDING MEDIUM THEREOF**

(30) Priority: 08.12.2022 KR 20220170503
(71) Applicant: Hyperconnect LLC, Seoul 06164 (KR)
(72) Inventor: LEE, Joonyoung, 06164 Seoul (KR)
(74) Representative: Zimmermann & Partner Patentanwälte mbB

(57) **Abstract**

Disclosed is a video generating method including obtaining (S210) a target video including a plurality of frame images, obtaining (S220) first frame information about at least some frame images to be inference target among the plurality of frame images, inputting (S230) frame images corresponding to the first frame information into an inference model to obtain content event information for extracting a video with respect to the target video, obtaining (S240) information about a selected section of the target video based on the content event information, and generating (S250) a first extracted video based on the target video and information about the selected section.

## Description

### CROSS-REFERENCE TO RELATED APPLICATION(S)

This application claims the benefit of Korean Patent Application No. 10-2022-0170503, filed on December 8, 2022, in the Korean Intellectual Property Office, the disclosure of which is incorporated herein by reference.

### BACKGROUND

### 1. Field of the Invention

Example embodiments relate to an apparatus that extracts and generates a video of a specific section from a long video, a method and computer-readable recording medium related thereto.

### 2. Description of the Related Art

The video platform market is growing. For example, previously, only a small number of professional steamers broadcasted, but now a significant number of ordinary people also broadcast for purposes such as marketing and profit generation. In particular, with the advancement of technology, the communication delay between streamers and viewers has been greatly reduced, making almost real-time communication possible, and entry by the general public is becoming more active.

Video platforms are divided into a live streaming platform where viewers connect and watch when a streamer broadcasts in real time, and a non-live streaming platform where viewers select the video they want to watch when recorded videos are uploaded. Accordingly, streamers generally broadcast on live streaming platforms, record the broadcast, edit the recorded videos and upload the edited videos to non-live streaming platforms. This is because when the edited videos become popular on the non-live streaming platforms, a virtuous cycle occurs in which users who want to watch the videos of the streamers in real time flow into the live streaming platforms.

However, in the case of the general public, it is difficult to fully pay the cost of recording a broadcast on a live streaming platform due to a lack of investment capital and time. Further, even if the broadcast is recorded, it is not easy to generate a video to upload to a non-live streaming platform, as the time required for video editing is limited and editing skills of the public are often rudimentary.

### SUMMARY

An aspect provides an apparatus that easily extracts images of a section from an existing video and generates a relatively short video such as highlight video clips and videos for reporting abusing actions, and a method related thereto.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

According to an aspect, there is provided a video generating method including: obtaining a target video which includes a plurality of frame images and which is transmitted through a session established between two or more terminals, obtaining first frame information about at least some frame images to be inference target among the plurality of frame images, inputting frame images corresponding to the first frame information into an inference model to obtain content event information for extracting a video with respect to the target video, obtaining information about a selected section of the target video based on the content event information, and generating a first extracted video based on the target video and information about the selected section. The "first frame information" may include information suitable to retrieve the images within the target video and/or may include the image frames. The "inference model" may be a model trained to identify whether the frame images show predefined (learned) content. For example, the inference model may be trained with text data describing content and frame images showing examples of the described content to learn a correlation between both. For illustration purposes, an image in which a text (or an embedding vector thereof) defining an event is labeled as a ground truth may be used for the learning of the model. The inference model may output information related to the identified content as "content event information." The content event information may include information suitable to retrieve the frame images, which contain the identified content, within the target video. The "information about a selected section of the target video" may include information about a section which contains timepoint corresponding the identified content. The video generating method may be performed using an apparatus and/or a video processing system as described herein.

According to an example embodiment, the obtaining the target video may include obtaining the target video from a relay server while the target video is transmitted from a streamer terminal to one or more viewer terminals through the relay server.

According to an example embodiment, the obtaining the first frame information may include transmitting the frame images to be inference targets, session identification information of the session through which the target video is transmitted, and timestamps corresponding to the frame images to be the inference targets to a first event queue, and obtaining the frame images, the session identification information and the timestamps stored in the first event queue as first frame information.

According to an example embodiment, the transmitting to the first event queue may include transmitting to the first event queue a frame image corresponding to an I-frame and selected as an inference target with a predetermined probability among the plurality of frame images, the session identification information and a timestamp corresponding to the selected frame image.

According to an example embodiment, the frame images corresponding to the first frame information may include I-frame images grouped based on the session identification information of the session through which the target video is transmitted.

According to an example embodiment, the obtaining the content event information may include transmitting session identification information and a timestamp corresponding to a frame image selected based on inferred values of the inference model for the input frame images to a second event queue, and obtaining the session identification information and the timestamp stored in the second event queue as content event information.

According to an example embodiment, the generating the first extracted video may include specifying the target video based on the session identification information included in the content event information, and among frame images included in the specified target video, generating the first extracted video using frame images belonging to a predetermined time section including timepoints of timestamps included in the content event information.

According to an example embodiment, the generating the first extracted video using the frame images belonging to the predetermined time section may include generating the first extracted video using frame images belonging to a time section that is set based on event identification information included in the content event information while including the timepoints of the timestamps included in the content event information.

According to an example embodiment, the generating the first extracted video may include, regarding identical session identification information included in the content event information, if a content event occurs at a second timepoint within a predetermined period of time after a content event occurs at a first timepoint, if no additional content event occurs within a predetermined period of time after the content event occurs at the second timepoint, generating the first extracted video using frame images belonging to a time section including the first timepoint and the second timepoint, and if a content event occurs at a third timepoint within a predetermined period of time after the content event occurs at the second timepoint, determining whether an additional content event occurs within a predetermined period of time based on the third timepoint.

According to an example embodiment, the video generating method may further include applying a retention period to the plurality of frame images included in the target video and storing the frame images in a storage, and the first extracted video may be generated using at least some of the frame images stored in the storage.

According to an example embodiment, the video generating method may further include transmitting the target video to one or more viewer terminals or a streamer terminal scheduled to transmit the target video.

According to an example embodiment, the video generating method may further include transmitting the generated first extracted video to one or more viewer terminals or the streamer terminal scheduled to transmit the first extracted video.

According to an example embodiment, the video generating method may further include uploading the generated first extracted video to a content delivery network (CDN), and receiving address information referring to the uploaded first extracted video.

According to an example embodiment, the video generating method may further include uploading the generated first extracted video to one or more contents hosting platforms or social network platforms under a name of a pre-linked account.

According to an example embodiment, the inference model may receive frame images included in each of a plurality of different target videos in batch form and infer whether each frame image is a frame image suitable for serving as reference for video extraction.

According to an example embodiment, the inference model may individually receive one or more frame images included in one target video and infer whether each frame image is a frame image suitable for serving as reference for video extraction.

According to an example embodiment, the inference model may include a first sub-inference model that receives frame images included in each of a plurality of different target videos in batch form and firstly infers whether each frame image is a frame image that is suitable for reference for video extraction, and a second sub-inference model that receives a frame image determined to be reference for video extraction according to a result of first inference by the first sub-inference model, individually for each target video, and secondly infers whether each frame image is a frame image that is suitable for serving as reference for video extraction.

According to an example embodiment, the inference model may include a text conversion module that converts each of one or more texts defined in relation to a content event into a first embedding vector, an image conversion module that converts a frame image that is input to the inference model into a second embedding vector, a correlation degree calculation module that calculates correlation degrees between the each first embedding vector and the second embedding vector, and an output module in which, if a correlation degree that is higher than or equal to a threshold correlation degree that is set for each of the one or more texts is present among the calculated correlation degrees, an inferred value indicating at least one of frame images corresponding to the correlation degree that is higher than or equal to the threshold correlation degree is output.

According to another aspect, there is provided a video generating method including obtaining a target video including a plurality of frame images, receiving a recording request from a terminal connected to a session through which the target video is transmitted, and generating a second extracted video using frame images corresponding to session identification information of the session through which the target video is transmitted and a timestamp of a timepoint of the recording request.

According to another aspect, there is provided an apparatus including an input/output interface, a memory for storing instructions and a processor, wherein the processor, connected to the input/output interface and the memory, is configured to obtain a target video including a plurality of frame images, obtain first frame information about at least some frame images to be inference target among the plurality of frame images, input frame images corresponding to the first frame information into an inference model to obtain content event information for extracting a video with respect to the target video, obtain information about a selected section of the target video based on the content event information, and generate a first extracted video based on the target video and information about the selected section. The apparatus may be adapted to perform at least some of the processes of the video generating method as described herein.

According to an example embodiment, there may be provided a non-transitory computer-readable recording medium having a program for executing the video generating method.

According to another aspect, there is provided a video processing system including a relay server that receives from a streamer terminal a target video including a plurality of frame images that is transmitted through a session established between two or more terminals, and that transmits the target video to a video processing server or a storage, a video processing server that receives the target video from the relay server, obtains first frame information about at least some frame images to be inference target among the plurality of frame images, inputs frame images corresponding to the first frame information into an inference model to obtain content event information for extracting a video with respect to the target video, obtains information about a selected section of the target video based on the content event information, and generates a first extracted video based on the target video and information about the selected section, and a storage that receives the target video from the relay server and stores the target video by applying a retention period to the plurality of frame images included in the target video. The video processing system may be adapted to perform at least some of the processes of the video generating method as described herein.

Additional aspects of example embodiments will be set forth in part in the description which follows and, in part, will be apparent from the description, or may be learned by practice of the disclosure.

According to example embodiments, it is possible to reduce the cost of video recording compared to converting all frame images to a video by extracting frame images selected from a video and generating a shorter video. Thus, resources required for recording and storing video may be reduced.

For example, by inferring frame images appropriate for a specific event through an inference model and generating a short video, video recording may be automatically performed depending on a type of event.

For another example, by receiving a recording request from a terminal connected to a session through which the video is transmitted and generating a short video, it is possible to cost-effectively record video only for a section desired by a user.

Effects of the present disclosure are not limited to those described above, and other effects may be made apparent to those skilled in the art from the following description.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a schematic diagram illustrating an environment in which a video generating apparatus operates according to an example embodiment;
FIG. 2 is a flowchart illustrating a video generating method according to an example embodiment;
FIG. 3 is a flowchart for explaining an example embodiment of operation S220;
FIG. 4 is a flowchart for explaining an example embodiment of operation S230;
FIG. 5 is a flowchart for explaining an example embodiment of operation S250;
FIG. 6 is a flowchart for explaining an additional example embodiment of operation S250;
FIGS. 7 to 10 are flowcharts for explaining a video generating method according to an additional example embodiment related to FIG. 2;
FIG. 11 is a flowchart illustrating a video generating method according to another example embodiment;
FIG. 12 is an exemplary diagram illustrating a video generating process according to an example embodiment;
FIG. 13 is an exemplary diagram illustrating an input/output process of an inference model according to an example embodiment; and
FIG. 14 is a block diagram for explaining a video generating apparatus according to an example embodiment.

### DETAILED DESCRIPTION

Hereinafter, specific example embodiments are described with reference to the drawings. The following detailed description is provided for comprehensive understanding of the methods, apparatus, and/or systems described herein. However, the example embodiments are only for understanding and the present disclosure is not limited to the detailed description.

In describing the embodiments, when it is determined that a detailed description of the related known technology may unnecessarily obscure the gist of the disclosed embodiments, the detailed description will be omitted. In addition, the terms to be described later are terms defined in consideration of functions in the example embodiments of the present disclosure, which may vary according to intentions or customs of users and operators. Therefore, the definitions should be made based on the content throughout the present disclosure. The terms used in the detailed description are for the purpose of describing the embodiments only, and the terms should never be restrictive. Unless explicitly used otherwise, expressions in the singular include the meaning of the plural. In the present disclosure, expressions such as "include" or "comprise" are intended to refer to certain features, numbers, steps, acts, elements, some or a combination thereof, and the expressions should not be construed to exclude the presence or possibility of one or more other features, numbers, steps, acts, elements, or some or combinations thereof other than those described.

Terms used in the example embodiments are selected from currently widely used general terms when possible while considering the functions in the present disclosure. However, the terms may vary depending on the intention or precedent of a person skilled in the art, the emergence of new technology, and the like. Further, in certain cases, there are also terms arbitrarily selected by the applicant, and in the cases, the meaning will be described in detail in the corresponding descriptions. Therefore, the terms used in the present disclosure should be defined based on the meaning of the terms and the contents of the present disclosure, rather than the simple names of the terms.

Throughout the specification, when a part is described as "comprising or including" a component, it does not exclude another component but may further include another component unless otherwise stated. Furthermore, terms such as "... unit," "... group," and "... module" described in the specification mean a unit that processes at least one function or operation, which may be implemented as hardware, software, or a combination thereof. Unlike used in the illustrated embodiments, the terms may not be clearly distinguished in specific operations.

Expression "at least one of a, b and c" described throughout the specification may include "a alone," "b alone," "c alone," "a and b," "a and c," "b and c" or "all of a, b and c."

In the following description, terms "transmission," "communication," "sending," "receiving" and other similar terms not only refer to direct transmission of a signal or information from one component to another component, but may also include transmission via another component.

In particular, to "transmit" or "send" a signal or information to an element may indicate a final destination of the signal or information, and may not imply a direction destination. The same is applied to in "receiving" a signal or information. In addition, in the present disclosure, when two or more pieces of data or information are "related," it indicates that when one piece of data (or information) is obtained, at least a part of the other data (or information) may be obtained based thereon.

Further, terms such as first and second may be used to describe various components, but the above components should be not limited by the above terms. The above terms may be used for the purpose of distinguishing one component from another component.

For example, without departing from the scope of the present disclosure, a first component may be referred to as a second component. Similarly, the second component may also be referred to as the first component.

In describing the example embodiments, descriptions of technical contents that are well known in the technical field to which the present disclosure pertains and that are not directly related to the present disclosure will be omitted. This is to more clearly convey the gist of the present disclosure without obscuring the gist of the present disclosure by omitting unnecessary description.

For the same reason, some elements are exaggerated, omitted or schematically illustrated in the accompanying drawings. In addition, the size of each element does not fully reflect the actual size. In each figure, the same or corresponding elements are assigned the same reference numerals.

Advantages and features of the present disclosure, and a method of achieving the advantages and the features will become apparent with reference to the example embodiments described below in detail together with the accompanying drawings. However, the present disclosure is not limited to the example embodiments disclosed below, and may be implemented in various different forms. The example embodiments are provided only so as to render the present disclosure complete, and completely inform the scope of the present disclosure to those of ordinary skill in the art to which the present disclosure pertains. The present disclosure is only defined by the scope of the claims. Like reference numerals refer to like elements throughout.

It will be understood that each block of a flowchart diagram and a combination of the flowchart diagrams may be performed by computer program instructions. The computer program instructions may be embodied in a processor of a general-purpose computer or a special purpose computer, or may be embodied in a processor of other programmable data processing equipment. Thus, the instructions, executed via a processor of a computer or other programmable data processing equipment, may generate a part for performing functions described in the flowchart blocks. To implement a function in a particular manner, the computer program instructions may also be stored in a computer-usable or computer-readable memory that may direct a computer or other programmable data processing equipment. Thus, the instructions stored in the computer usable or computer readable memory may be produced as an article of manufacture containing an instruction part for performing the functions described in the flowchart blocks. The computer program instructions may be embodied in a computer or other programmable data processing equipment. Thus, a series of operations may be performed in a computer or other programmable data processing equipment to create a computer-executed process, and the computer or other programmable data processing equipment may provide steps for performing the functions described in the flowchart blocks.

Additionally, each block may represent a module, a segment, or a portion of code that includes one or more executable instructions for executing a specified logical function(s). It should also be noted that in some alternative implementations the functions recited in the blocks may occur out of order. For example, two blocks shown one after another may be performed substantially at the same time, or the blocks may sometimes be performed in the reverse order according to a corresponding function.

Hereinafter, example embodiments of the present disclosure will be described in detail with reference to the accompanying drawings so that those of ordinary skill in the art to which the present disclosure pertains may easily implement them. However, the present disclosure may be implemented in multiple different forms and is not limited to the example embodiments described herein.

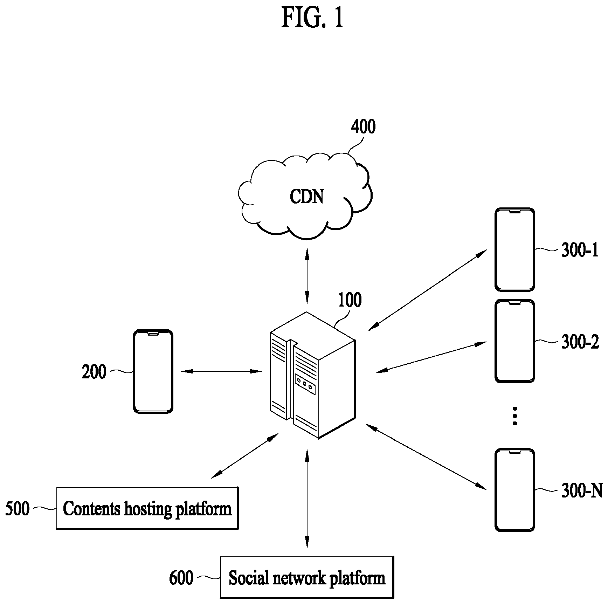

FIG. 1 is a schematic diagram illustrating an environment in which a video generating apparatus according to an example embodiment. Referring to FIG. 1, a video generating apparatus 100 operates while exchanging data with a streamer terminal 200, a viewer terminal 300-1, a viewer terminal 300-2, ... and a viewer terminal 300-N, a CDN 400, a contents hosting platform 500 and a social network platform 600. Here, some of the viewer terminal 300-1, the viewer terminal 300-2, ..., the viewer terminal 300-N, the CDN 400, the contents hosting platform 500 and the social network platform 600 may be omitted according to an example embodiment.

According to an example embodiment, the video generating apparatus 100 may extract a video of a partial section inferred from a video obtained from an external source (for example, the streamer terminal 200, the viewer terminal 300-1, the viewer terminal 300-2, ..., the viewer terminal 300-N, or a relay server), through an inference model, and the video generating apparatus 100 may generate a highlight video in which a specific event is recorded or report video including an act against regulations with respect to an existing video. For example, the video generating apparatus 100 may extract a video of a section inferred by an inference model that an event in which a streamer claps is recorded, and may extract video of a section inferred that a viewer transmitted a chatting message containing profanity to a streamer. For this, the video generating apparatus 100 may include a storage to store the obtained video, an event queue that temporarily stores information for video extraction, a model control module that exchanges data with the inference model, a video processing module that generates extracted video using frame images of a partial section from the storage. According to another example embodiment, the video generating apparatus 100 may further include a storage for video storing or an inference model for performing inference on an image.

Further, according to another example embodiment, the video generating apparatus 100 may obtain video from the outside and extract video of a section corresponding to the timepoint when the streamer terminal 200 or one of the viewer terminal 300-1, the viewer terminal 300-2, ..., and the viewer terminal 300-N requests recording. For this, the video generating apparatus 100 may include a storage for storing the obtained video and a video processing module for generating an extracted video using frame images of a partial section from the storage. Further, according to an example embodiment, the video generating apparatus 100 may further include a storage to store video.

According to the example embodiments, a streamer or a viewer may obtain a summary video in which necessary sections are automatically extracted without a separate recording request, or may obtain a summary video from which a specific section is extracted simply by a request for recording at a necessary time. In other words, not only full-time streamers, but also ordinary people who have newly entered a video platform may easily create summary videos, and thus summary videos may be uploaded to the CDN 400 or to various types of video platforms (for example, the contents hosting platform 500 and the social network platform 600) or video streaming to the same for marketing and profit generation. In addition, since content streaming is usually performed for a very long time, producing a summary video is a labor-intensive task. By automating this task as described herein, streamers can focus on the streamer's original role and reduce the initial investment cost.

Each of the elements illustrated in FIG. 1 can communicate with each other within the network. The communication network includes a local area network (LAN), a wide area network (WAN), a value added network (VAN), a mobile radio communication network, a satellite communication network, and combinations thereof. The communication network is a data communication network in a comprehensive sense that enables the constituent entities shown in FIG. 1 to communicate smoothly with each other, and may include a wired Internet, a wireless Internet, and a mobile wireless communication network. Examples of wireless communication may include wireless LAN (Wi-Fi), Bluetooth, Bluetooth low energy, ZigBee, Wi-Fi direct (WFD), ultra wideband (UWB), infrared data association (IrDA) and near field communication (NFC), but is not limited thereto.

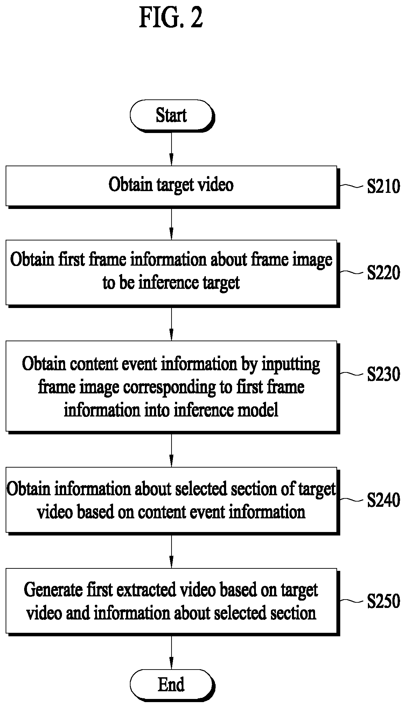

With regard the above, it will be described in more detail through the following drawings. A method described below with reference to FIGS. 2 to 11 may be performed by the video generating apparatus 100, but the method may be performed by using an additional entity in addition to the video generating apparatus 100.

FIG. 2 is a flowchart illustrating a video generating method according to an example embodiment.

In operation S210, the video generating apparatus 100 obtains a target video including a plurality of frame images.

According to an example embodiment, the video generating apparatus 100 may receive the target video from the streamer terminal 200 or a relay server. Meanwhile, the target video used by the video generating apparatus 100 to extract a video through the following process may be a copy. In this case, the original of the target video may be stored separately in a storage space of the video generating apparatus 100 or in a storage space of the streamer terminal 200. The original of the target video may be stored in a storage external to the video generating apparatus 100, where a copy of the target video is temporarily stored, or in a storage included in the video generating apparatus 100.

According to an example embodiment, while the target video is being transmitted from the streamer terminal 200 to one or more viewer terminals through the relay server, the video generating apparatus 100 may obtain the target video from the relay server.

According to an example embodiment, in addition to the target video, the video generating apparatus 100 may additionally obtain session identification information of a session through which the target video is transmitted or identification information of the streamer who broadcast the target video.

According to an example embodiment, the target video obtained by the video generating apparatus 100 may include an I-frame image (an I-Frame or an intra frame) that does not refer to other frame images within the target video and a P-frame image (a P-frame or a predicted frame) that is stored by differences from the I-frame image being predicted. The characteristics of the I-frame image are as follows. First, the target video may be restored simply by using I-frame images. Second, an inference result or a prediction result for an I-frame image may be extended and applied to images of surrounding frames temporally adjacent to the relevant I-frame image.

According to an example embodiment, the video generating apparatus 100 may store the obtained target video in a storage external to the video generating apparatus 100 or a storage included in the video generating apparatus 100.

In operation S220, the video generating apparatus 100 identifies first frame information about at least some frame images to be inferred among the plurality of frame images.

According to an example embodiment, the first frame information identified by the video generating apparatus 100 may include frame images selected as inference targets, session identification information of the session through which the target video is transmitted and timestamps corresponding to the selected frame images.

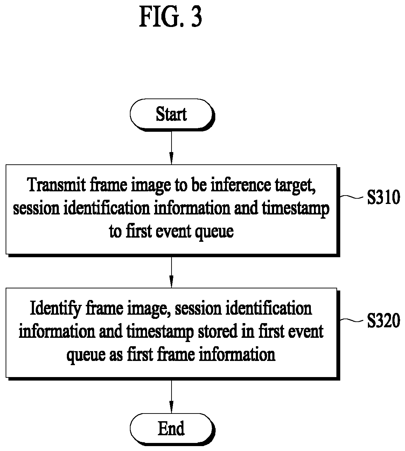

More specifically, as shown in FIG. 3, to a first event queue, the video generating apparatus 100 may transmit the frame images to be the inference targets, the session identification information of the session through which the target video is transmitted and the timestamps corresponding to the frame images to be inferred in operation S310. In operation S320, the video generating apparatus 100 may obtain the frame images, the session identification information and the timestamps stored in the first event queue as first frame information. In an example embodiment, the first event queue may include an architecture based on Apache Kafka. Further, in an example embodiment, the function of identifying the first frame information from the first event queue may be implemented through an architecture based on Apache Flink.

Here, as an example embodiment in relation to operation S310, the video generating apparatus 100 may transmit all I-frame images included in the target video to the first event queue, the video generating apparatus 100 may randomly select an I-frame image included in the target video with a certain probability and transmit the I-frame image to the first event queue, or the video generating apparatus 100 may select I-frame images in a specific order among the I-frame images included in the target video and transmit the I-frame images to the first event queue. In other words, the frame images that the video generating apparatus 100 transmits from the target video to the first event queue may be all I-frame images included in the target video, or may be some I-frame images that are selected in consideration of the cost or resources required to transmit the images.

Referring back to FIG. 2, in operation S230, the video generating apparatus 100 inputs the frame images corresponding to first frame image information identified through operation S220 into an inference model to obtain content event information for extracting video with respect to the target video. Specifically, the video generating apparatus 100 may input the frame images corresponding to the first frame information into the inference model and identify content event information that is the reference for video extraction based on the output of the inference model.

According to an example embodiment, a set of images corresponding to the first frame information may include I-frame images grouped based on the session identification information of the session through which the target video is transmitted. Specifically, the frame images corresponding to the first frame information may be a set in which I-frame images corresponding to the same session identification information are grouped. For this operation, the video generating apparatus 100 may temporarily store the I-frame images with the same session identification information in a cache. If a certain number or more of I-frame images with the same session identification information are temporarily stored, or if the I-frame images with the same session identification information are temporarily stored for a certain period of time or longer, the video generating apparatus 100 may input temporarily stored frame images into the inference model.

According to another example embodiment, among a plurality of frame images included in the target video, the frame images corresponding to the first frame information may include frame images that do not correspond neither (1) an 1-frame image nor (2) a frame image, but satisfy a set timepoint condition, a time section condition, a sequence condition or a capacity condition. In an example embodiment, the frame image may include P-frame image or B-frame image (a B-Frame or a bidirectional frame), which is not an I-frame image but corresponds to a specific timepoint, included in a specific time section, corresponding to a specific sequence number, or below a certain capacity.

According to an example embodiment, the inference model may be implemented on a server separate from the video generating apparatus 100 (for example, the Triton inference server), but the inference model is not limited thereto, and according to an example embodiment, the inference model may be implemented in memory within the video generating apparatus 100.

According to an example embodiment, the inference model may be selected based on the time and computing resources required for inference. The inference model may be a model that receives frame images of multiple target videos at once and performs inference, or may be a model that performs inference by receiving only frame images of one target video at a time. In the former case, the inference model may be a model that receives frame images included in each of a plurality of different target videos in batch form and infers whether each frame image is a frame image that can be reference for video extraction. However, in the latter case, the inference model may be an inference model individually receives one or more frame images included in one target video and infers whether each frame image is a frame image suitable for serving as reference for video extraction. As a result, the former case performs inference by receiving frame images from different broadcasts or different target videos, so the former case has the disadvantage of taking a long time (slow speed) for inference, but is cost-effective. The latter case performs inference for each target video, so the latter case has the disadvantage of high inference costs (consuming a lot of computing resources) but has the advantage of a short inference time.

Further, according to an example embodiment, the inference model may be a mixture of the two types of models and may be a model that performs inference twice. In other words, the inference model may include a first sub-inference model that receives frame images included in each of a plurality of different target videos in batch form and first infers whether each frame image is a frame image that can be reference for video extraction, and a second sub-inference model that receives frame images that are determined to be reference for video extraction according to results of the first inference individually for each target video, and makes a second inference as to whether each frame image is a frame image that can be reference for video extraction. The structure of the inference model is intended to increase the accuracy of inference through two inferences while compromising the computing resources and time required for inference.

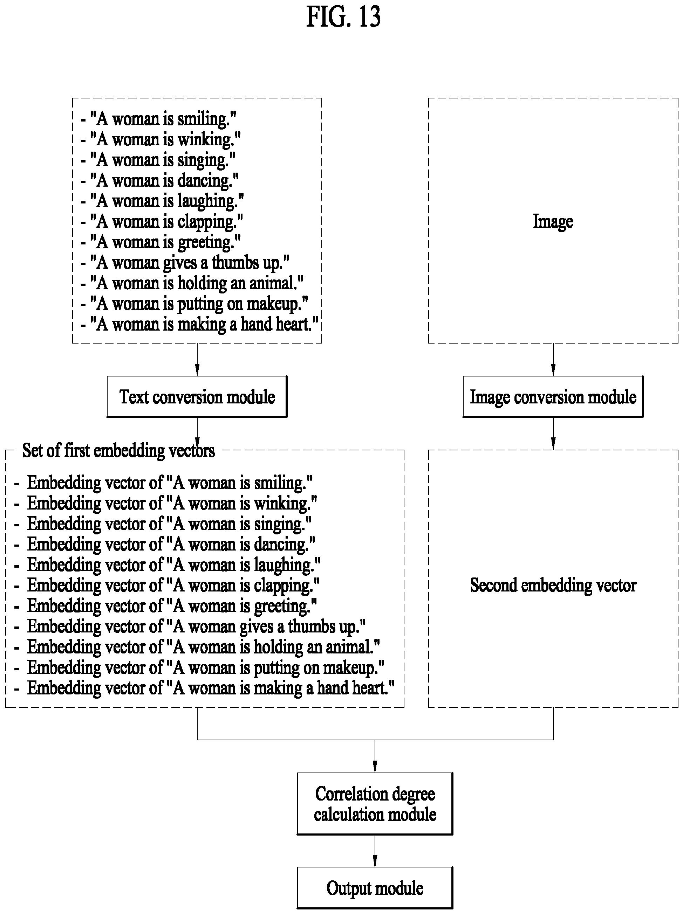

Further, according to an example embodiment, the inference model (or a sub-inference model) compares text representing an event of a video and a frame image that is input to the inference model (or the sub-inference model), and may identify the type of event corresponding to the input frame image according to the degree of similarity between the two. For the operation, the inference model (or the sub-inference model) may include the following detailed elements. With regard thereto, descriptions will be made with reference to FIG. 13 below.

A first detailed element is a text conversion module that converts each of one or more texts defined in relation to a content event into a first embedding vector.

A second detailed element is an image conversion module that converts a frame image that is input to the inference model (or the sub-inference model) into a second embedding vector.

A third detailed element is a correlation degree calculation module. The correlation degree calculation module calculates the correlation degrees between each first embedding vector and the second embedding vector.

A fourth detailed element is an output module. If, among the calculated correlation degrees, there is a correlation degree higher than or equal to a threshold correlation degree that is set for each text, the output module outputs an inferred value indicating at least one of frame images corresponding to the correlation degree higher than or equal to the threshold correlation degree. For example, the output module may output an inferred value indicating a frame image corresponding to the maximum correlation degree among correlation degrees that are higher than or equal to the threshold correlation degree, or may output an inferred value indicating each frame image corresponding to all correlation degrees that are higher than or equal to the threshold correlation degree. However, the form of the inference value that is output by the output module is not limited thereto.

According to an example embodiment, among the calculated correlation degrees, if there is no correlation degree that is higher than or equal to the threshold correlation degree that is set for each text, the inference model (or the sub-inference model) may terminate inference about a frame image that is input to the inference model (or the sub-inference model).

Further, according to an example embodiment, among the calculated correlation degrees, if there is no correlation degree that is higher than or equal to the threshold correlation degree that is set for each text, the inference model (or the sub-inference model) may output an inferred value for a frame image that is input to the inference model with a set probability. In other words, even when it is determined that there is no event similar to the input frame image, the inference model may transmit an inference value for the frame image to the video generating apparatus 100 with a certain probability, the video generating apparatus 100 may transmit session identification information and a timestamp corresponding to the frame image to a second event queue, and the video generating apparatus 100 may collect the corresponding session identification information and the timestamp stored in the second event queue as a negative sample. The negative sample collected in this way may be used for learning to increase the accuracy of the inference model in the future. Thus, transmitting the inference value for the frame image in which the inference model determines that there is no similar event to the video generating apparatus 100 with a certain probability may indicate that data can be accumulated for model learning at the same time as inference.

Further, according to an example embodiment, the content event information identified by the video generating apparatus 100 may include session identification information and the timestamp corresponding to the frame image selected with the consideration of the output of the inference model.

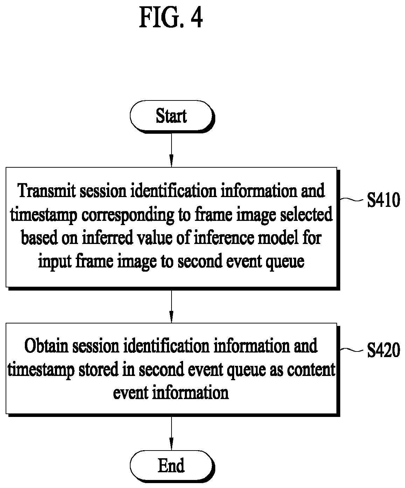

More specifically, as shown in FIG. 4, in operation S410, the video generating apparatus 100 may transmit session identification information and a timestamp corresponding to a frame image selected based on an inferred value of the inference model for an input frame image to a second event queue. In operation S420, the video generating apparatus 100 may obtain the session identification information and the timestamp stored in the second event queue as content event information. In an example embodiment, the second event queue may include an architecture based on Apache Kafka.

Referring back to FIG. 2, in operation S240, the video generating apparatus 100 may identify information about a selected section of the target video based on the content event information identified in operation S230.

In operation S250, the video generating apparatus 100 may generate a first extracted video based on the target video and the information about the section selected in operation S240.

According to an example embodiment, the video generating apparatus 100 may transmit the generated first extracted video to one or more viewer terminals or the streamer terminal 200 that is scheduled to transmit the first extracted video.

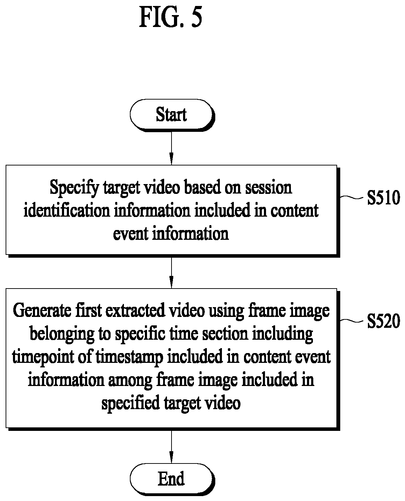

According to an example embodiment, as shown in FIG. 5, the video generating apparatus 100 may specify a target video based on session identification information included in content event information in operation S510, and the video generating apparatus 100 may generate a first extracted video using frame images belonging to a specific time section including timepoints of timestamps included in the content event information among frame images included in the specified target video in operation S520.

In an example embodiment related to operation S520, the video generating apparatus 100 may determine the time section of the frame images to be used for generating the first extracted video based on the type of event (an event inferred to correspond to the frame images) that the inference model inferred by receiving the frame images. Specifically, the video generating apparatus 100 may generate the first extracted video using frame images belonging to a time section that is set based on event identification information included in the content event information while including the timepoints of the timestamps included in the content event information. For example, in the case of a frame image from which it is inferred that an event a streamer consuming food occurred, including a timepoint of a timestamp of the frame image, the video generating apparatus 100 may generate the first extracted video as "mukbang highlight" by using frame images belonging to a time section including 30 seconds ahead from the timepoint and 30 seconds behind the timepoint. In the case of a frame image from which it is inferred that an event a streamer smiling occurred, including a timepoint of a timestamp of the frame image, the video generating apparatus 100 may generate the first extracted video as a "funny scene" by using frame images belonging to a time section including 10 seconds ahead from the timepoint and 5 seconds behind the timepoint.

Further, according to an example embodiment, if a plurality of content events occur within one session through which video is transmitted, the video generating apparatus 100 may generate one extracted video corresponding to two or more content events based on the interval in which the content events occurred. For example, if two content events occur consecutively within a certain interval, the video generating apparatus 100 may generate one extracted video that can encompass the two content events, rather than generating two extracted videos that are close in time.

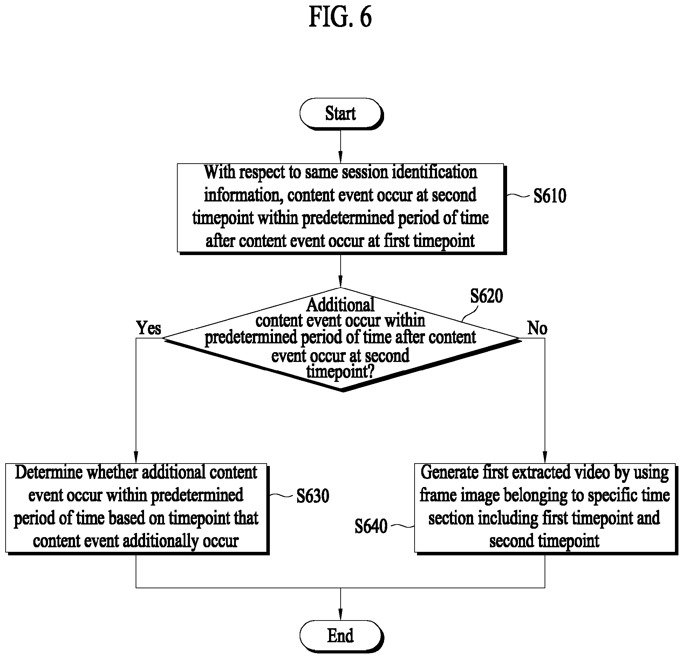

FIG. 6 exemplarily shows a process related thereto. Referring to FIG. 6, with respect to the same session identification information included in the content event information, if a content event occurs at a second timepoint within a predetermined period of time after a content event occurs at a first timepoint, the video generating apparatus 100 may identify whether an additional content event occurs within a predetermined period of time after the content event occurs at the second timepoint in operation S610 and operation S620.

In operation S630, if a content event occurs at a third timepoint within a predetermined period of time after the content event occurs at the second timepoint, the video generating apparatus 100 may determine whether an additional content event occurs within a predetermined period of time based on the third timepoint. If no additional content event occurs until a predetermined period of time elapses after the third timepoint, the video generating apparatus 100 may generate the first extracted video using the first timepoint as the start timestamp (start_timestamp) and the third timepoint as the end timestamp (end_timestamp). If an additional content event occurs at a fourth timepoint within a predetermined period of time after the third timepoint, the video generating apparatus 100 may repeat operation S630 based on the fourth timepoint.

Further, in operation S640, if no additional content event occurs within a predetermined period of time after the content event occurs at the second timepoint, the video generating apparatus 100 may generate the first extracted video using frame images belonging to a specific time section including the first timepoint and the second timepoint. For example, having a first timepoint as the start timestamp (start_timestamp) and a second timepoint as the end timestamp (end_timestamp), the video generating apparatus 100 may generate a first extracted video including frame images belonging from M minute before the start_timestamp to N minute after the end_timestamp.

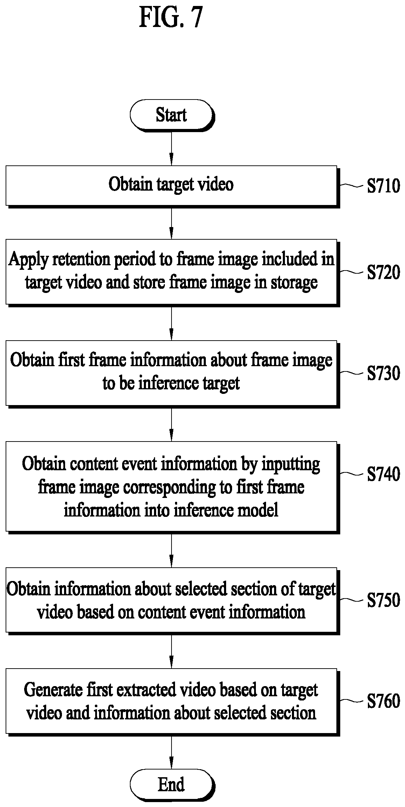

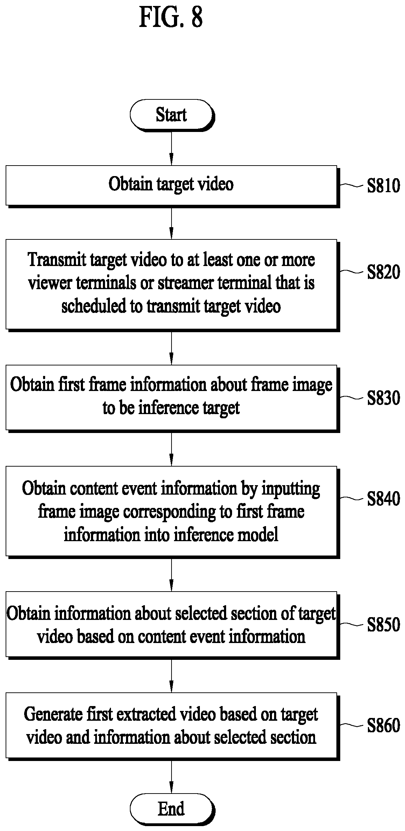

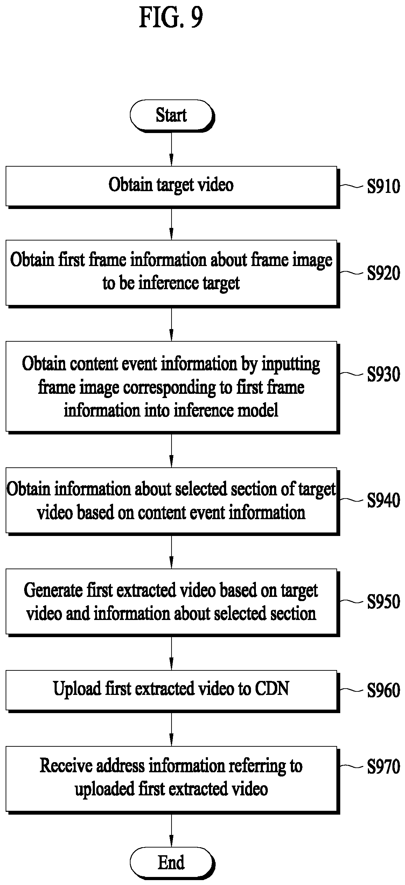

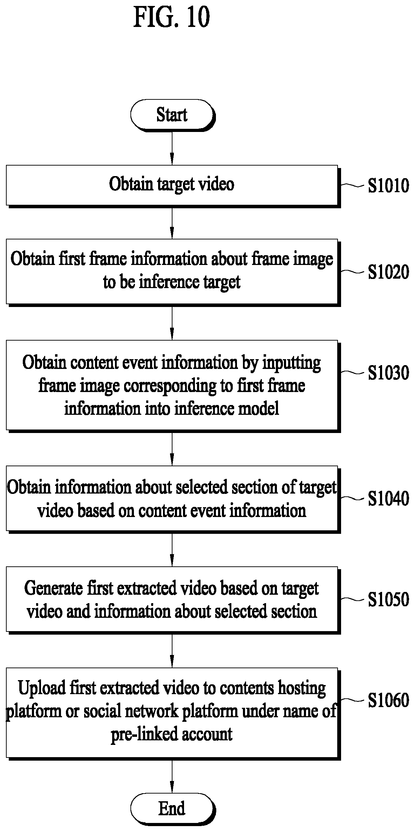

FIGS. 7 to 10 are flowcharts for explaining a video generating method according to an additional example embodiment related to FIG. 2. Specifically, FIG. 7 is a flowchart related to a process of separately storing an obtained target video. FIG. 8 is a flowchart related to a process of separately transmitting the obtained target video. FIGS. 9 and 10 are flowcharts related to a process of uploading the generated first extracted video to a separate space.

First referring to FIG. 7, the video generating apparatus 100 may obtain a target video including a plurality of frame images in operation S710. In operation S720, the video generating apparatus 100 may apply a retention period to the plurality of frame images included in the target video and store the frame images in a storage. This is because the capacity occupied by the frame images included in the target video is quite large, and because it is unlikely that the frame images of the entire target video will be used again except for the frame images that will be used to generate the first extracted video or the second extracted video in the future. Efficient use of storage becomes possible by storing the frame images in the storage by applying a certain retention period and setting the frame images to be automatically deleted when the retention period expires.

Further, in operation S730, the video generating apparatus 100 may obtain first frame information about at least some frame images to be inference targets among the plurality of frame images. In operation S740, by inputting the frame images corresponding to the first frame information into the inference model, content event information for extracting a video with respect to the target video may be obtained. In operation S750, based on the content event information, information about the selected section of the target video may be obtained. In operation S760, based on the target video and information about the selected section, the first extracted video may be generated using at least some of the frame images stored in the storage.

Further, referring to FIG. 8, the video generating apparatus 100 may obtain a target video including a plurality of frame images in operation S810. In operation S820, the video generating apparatus 100 may transmit the obtained target video to at least one of the viewer terminal 300-1, the viewer terminal 300-2, ..., the viewer terminal 300-N and the streamer terminal 200 that is scheduled to transmit the target video. This is to relay the entire video (the target video) to viewers or the host of the session through which the video is shared before generating the extracted video, and this allows the viewers or the host to select the video they want to watch among extracted videos and the entire video generated later. The description of operation S830 to operation S860 is omitted since it is the same or similar to operation S730 to operation S760 shown in FIG. 7.

Further, referring to FIG. 9, the video generating apparatus 100 may obtain a target video including a plurality of frame images in operation S910. In operation S920, first frame information about at least some of the frame images to be inference targets among the plurality of frame images may be obtained. In operation S930, by inputting the frame images corresponding to the first frame information into the inference model, content event information for extracting video from the target video may be obtained. In operation S940, based on the content event information, information about the selected section of the target video may be obtained. In operation S950, based on the target video and information about the selected section, the first extracted video may be generated using at least some of the frame images stored in the storage.

In operation S960, the video generating apparatus 100 may upload the generated first extracted video to the CND 400. In operation S970, address information referring to the first extracted video uploaded from the CND 400 may be received.

Specifically, the video generating apparatus 100 may receive the address information referring to the first extracted video uploaded to the CDN 400 and transmit (1) session identification information corresponding to the first extracted video, (2) a timestamp indicating the start timepoint of the first extracted video, (3) a timestamp indicating the end timepoint of the first extracted video and (4) address information to a server that provides a target video transmission service (for example, a live streaming service), or to a separate database. Further, the server that received the information of (1) to (4) above may also store the information in a separate database linked to the server itself. In other words, there is an advantage that by uploading the extracted video to the CDN 400, free access to extracted video is possible through the CDN 400 without need to store all of the extracted video (which has a relatively large capacity) in the storage, just by storing only the information from (1) to (4) above (which has a relatively low capacity) in the database.

Further, referring to FIG. 10, the video generating apparatus 100 may obtain a target video include a plurality of frame images in operation S1010. In operation S 1020, the video generating apparatus 100 may obtain first frame information about at least some frame images to be inference targets among the plurality of frame images. In operation S1030, the video generating apparatus 100 may obtain content event information for video extracting with respect to the target video by inputting the frame images corresponding to the first frame information into the inference model. In operation S 1040, the video generating apparatus 100 may obtain information about a selected section of the target video based on the content event information. In operation S 1050, the video generating apparatus 100 may generate a first extracted video using at least some of frame images stored in the storage based on the target video and information about the selected section.

Further, in operation S1060, the video generating apparatus 100 may upload the generated first extracted video to one or more contents hosting platforms 500 or social network platforms 600 under a name of a pre-linked account. For example, the video generating apparatus 100 may upload the first extracted video to a contents hosting platform such as YouTube, or a social network platform such as Facebook, Instragram and TikTok. Through the operations, rather than simply automatically creating an extracted video from a target video, the generated extracted video may be automatically uploaded to various platforms to facilitate streamer marketing and revenue generation.

According to an example embodiment, the account to which the first extracted video is uploaded may be an account that the streamer terminal 200 registered in advance on a target video transmission service platform, or may be an account that the streamer terminal 200 registered in advance with the video generating apparatus 100.

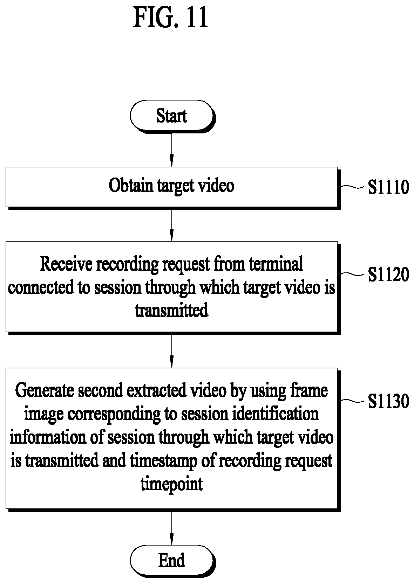

FIG. 11 is a flowchart illustrating a video generating method according to another example embodiment. Specifically, FIG. 11 relates to a method of generating an extracted video according to a recording request. In the method, the video generating apparatus 100 may quickly generate an extracted video when a specific event occurs, such as when a report is received for an abusing behavior on a target video transmission service or when a large donation (gifting) is made. The video generating method may directly generate extracted video in response to the recording request without the need to infer images through an inference model, and thus, compared to the video generating method in FIG. 2, the video generating method requires an action called a recording request, which reduces automaticity, but has the advantage of saving computing resources required for video generation.

In operation S1110, the video generating apparatus 100 may obtain a target video including a plurality of frame images.

In operation S1120, the video generating apparatus 100 may receive a recording request from a terminal connected to the session through which the target video is transmitted. In other words, the video generating apparatus 100 may receive a recording request from the streamer terminal 200 that is connected to the session through which the target video is transmitted or one of the viewer terminal 300-1, the viewer terminal 300-2, ... and the viewer terminal 300-N. The recording request may also be made through an interface provided within the target video transmission service, or through software or hardware provided in the streamer terminal 200 or the viewer terminal 300-1, the viewer terminal 300-2, ... or the viewer terminal 300-N to the video generating apparatus 100.

In operation S1130, the video generating apparatus 100 may generate a second extracted video by using frame images corresponding to the session identification information of the session through which the target video is transmitted and the timestamp of the recording request timepoint.

According to an example embodiment, the video generating apparatus 100 may specify the target video based on the session identification information, and the video generating apparatus 100 may generate a second extracted video including frame images belonging to a specific time section including the timepoints of the timestamps among frame images included in the specific target video.

The example embodiments including the process of separately transmitting or storing a target video described above with reference to FIGS. 7 and 8, or the example embodiments including the process of uploading an extracted video described above with reference to FIGS. 9 and 10 to a separate space may also be applied to the video generating method for generating the second extracted video of FIG. 11, and redundant explanations regarding them will be omitted.

In the above flowcharts (in FIGS. 2 to 11), a method to be explained is divided into a plurality of operations. However, at least some of the operations may be performed in a different order, may be combined with other operations and performed together, may be omitted, may be divided into detailed operations and performed, or may be performed by adding one or more operations that are not illustrated.

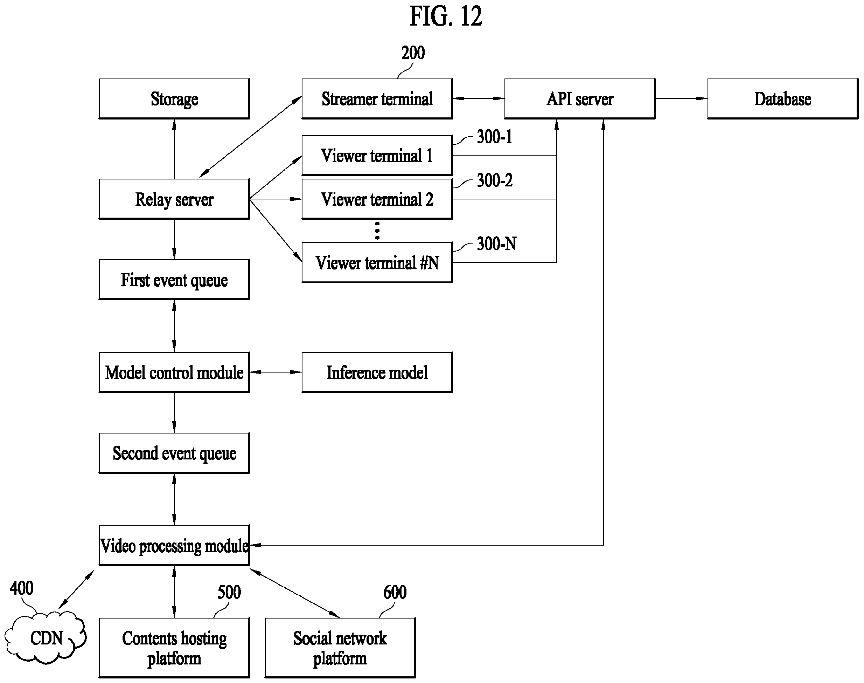

Hereinafter, through FIG. 12, a process for generating an extracted video is explained more intuitively, and from the process of FIG. 12, an input/output process in which inference is made from an inference model is additionally explained through FIG. 13.

The video generating process is explained with reference to FIG. 12 as follows.

First, in operation 1-1, when a streamer starts broadcasting through the streamer terminal 200, the streamer terminal 200 may transmit identification information of the streamer to an API server, and may receive session identification information (for example, the identification information of a room where the broadcast takes place) in response. Further, in operation 1-2, the streamer terminal 200 may transmit the broadcast target video and the streamer identification information or the session identification information to a relay server. Here, the target video may include an I-frame image and a P-frame image. Meanwhile, transmission between the streamer terminal 200 and the relay server may be performed through Web Real-Time Communication (WebRTC) technology, but is not limited thereto.

Further, in operation 2-1, the relay server may transmit a copy of the received target video to the viewer terminal 300-1, the viewer terminal 300-2, ..., and the viewer terminal 300-N. In operation 2-2, the relay server may store the I-frame image included in the target video and the P-frame image of the target video in a storage. Here, the frame images stored in the storage may be set to be deleted when a retention period (Time to Live: TTL) expires. Further, in operation 2-3, the relay server may transmit at least some of I-frame images included in the target video to a first event queue along with the session identification information and timestamps. Here, considering the possibility that only some of the I-frame images are transmitted to the first event queue is to efficiently use the costs (computing resources and time) required to generate the extracted video.

Then, in operation 3, the model control module may collect data (the 1-frame images, the session identification information and the timestamps) stored in the first event queue, and in operation 4, the model control module may transmit grouped I-frame images to the inference model based on the session identification information.

Referring to FIG. 13, the inference model may convert each of texts (for example, "A woman is smiling." and "A woman is winking.") defined in relation to a video event into a first embedding vector (an embedding vector of "A woman is smiling." and an embedding vector of "A woman is winking.") through a text conversion module. Further, the inference model may convert an image that is input to the inference model into a second embedding vector through the image conversion module.

Then, the inference model may calculate the correlation degrees between each of the first embedding vectors in a set of first embedding vectors and the second embedding vector by using a correlation degree calculation module, and the inference model may output an inference value indicating at least one of images corresponding to the correlation degree that is higher than or equal to the threshold correlation degree through an output module.

Referring back to FIG. 12, in operation 5, the model control module may receive the inference value from the inference model, and may transmit session identification information and a timestamp corresponding to an image indicated by the inferred value to a second event queue. Further, in operation 6, the video processing module may identify the session identification information and the timestamp stored in the second event queue as content event information.

Further, in operation 7, the video processing module may specify the target video based on the session identification information, and may generate a first extracted video by using frame images belonging to a specific time section including the timepoints of the timestamps. Further, in operation 8, the video processing module may upload the first extracted video to the CDN 400, the contents hosting platform 500 and the social network platform 600, and in operation 9, the video processing module may receive address information referring to the first extracted video from the CDN 400 and transmit the address information to the API server along with the session identification information and the timestamps of the start timepoint and end timepoint of the first extracted video. Further, in operation 10, the API server may store the transmitted data in the database.

Further, some of the operations upto operation 7 described above with reference to FIG. 12 may be performed through a video processing system including a storage, a relay server and a video processing server (including a first event queue, a model control module, an inference model, a second event queue and a video processing module). Specifically, the video processing system may include (1) a relay server that receives a target video containing a plurality of frame images from a streamer terminal that is transmitted through a session established between two or more terminals, and transmits the target video to a video processing server or storage, (2) a video processing server that receives the target video from the relay server, obtains first frame information about at least some frame images to be inference targets among the plurality of frame images, inputs frame images corresponding to the first frame image into the inference model to obtain content event information for video extracting with respect to the target video, obtains information about a selected section of the target video based on the content event information, and generates the first extracted video based on the target video and information about the selected section, and (3) a storage that receives the target video from the relay server and stores the target video by applying a retention period to the plurality of frame images included in the target video.

Further, differently from the process of generating the first extracted video, in the process of generating the second extracted video, the streamer terminal 200 or the viewer terminal 300-1, the viewer terminal 300-2, ... and the viewer terminal 300-N may transmit a recording request to the API server. The API server may transmit the session identification information of the session through which the target video is transmitted and a timestamp of the recording request timepoint to the video processing module. The video processing module may generate a second extracted video by retrieving a frame image corresponding to the received session identification information and the timestamp from the storage. In other words, the video generating apparatus 100 that generates the second extracted video may be linked to the API server or may include the API server itself.

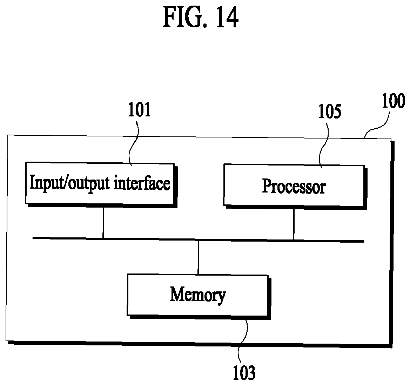

FIG. 14 is a block diagram for explaining a video generating apparatus according to an example embodiment.

The video generating apparatus 100 illustrated in FIG. 14 includes an input/output interface 101, a memory 103 and a processor 105. The video generating apparatus 100 may exchange data between internal modules through the input/output interface 101, or may be connected to an external apparatus to exchange data.

The processor 105 may perform at least one method described above with reference to FIGS. 1 to 13. The memory 103 may store information for performing at least one method described above with reference to FIGS. 1 to 13, and the memory 103 may be volatile memory or non-volatile memory.

The processor 105 may control the video generating apparatus 100 to execute programs and provide information. Program codes executed by the processor 105 may be stored in the memory 103.

Connected to the input/output interface 101 and the memory 103, the processor 105 of the video generating apparatus 100 may obtain a target video including a plurality of frame images, identify first frame information about at least some frame images to be inference targets among the plurality of frame images, obtain content event information for extracting a video with respect to the target video by inputting the frame images corresponding to the first frame information into the inference model, obtain information about a selected section of the target video based on the content event information, and generate the first extracted video based on the target video and information about the selected section.

The video generating apparatus 100 illustrated in FIG. 14 shows only elements related to the example embodiments. Therefore, those skilled in the art related to the example embodiments may understand that other general-purpose elements can be included in addition to the elements shown in FIG. 14.

More specifically, the apparatus according to the example embodiments described above may include a processor, a memory that stores and executes program data, permanent storage such as a disk drive, a communication port to communicate with external apparatuses, and user interface apparatuses such as touch panels, keys and buttons. Methods implemented as software modules or algorithms may be stored on a computer-readable recording medium as computer-readable codes or program instructions executable on the processor. Here, computer-readable recording media include magnetic storage media (for example, read-only memory (ROM), random-access memory (RAM), a floppy disk and a hard disk) and optical reading media (for example, a CD-ROM and a digital versatile disc (DVD)). A computer-readable recording medium may be distributed among computer systems connected through a network, and computer-readable codes may be stored and executed in a distributed manner. The medium may be readable by a computer, stored in a memory, and executed by a processor.

The example embodiments may be represented by functional block elements and various processing steps. The functional blocks may be implemented in any number of hardware and/or software configurations that perform specific functions. For example, an example embodiment may adopt integrated circuit configurations, such as memory, processing, logic and/or look-up table, that may execute various functions by the control of one or more microprocessors or other control devices. Similar to that elements may be implemented as software programming or software elements, the example embodiments may be implemented in a programming or scripting language such as C, C++, Java, assembler, etc., including various algorithms implemented as a combination of data structures, processes, routines, or other programming constructs. Functional aspects may be implemented in an algorithm running on one or more processors. Further, the example embodiments may adopt the existing art for electronic environment setting, signal processing, and/or data processing. Terms such as "mechanism," "element," "means" and "configuration" may be used broadly and are not limited to mechanical and physical elements. The terms may include the meaning of a series of routines of software in association with a processor or the like.

The above-described example embodiments are merely examples, and other embodiments may be implemented within the scope of the claims to be described later.

## Claims

1. A computer-implemented video generating method comprising:
obtaining (S210, S710, S810) a target video including a plurality of frame images that is transmitted through a session established between two or more terminals (200, 300-1, 300-2, ... 300-N);
obtaining (S220, S730, S830) first frame information about at least some frame images to be inference target among the plurality of frame images;
inputting (S230, S740, S840) frame images corresponding to the first frame information into an inference model to obtain content event information for extracting a video with respect to the target video;
obtaining (S240, S750, S850) information about a selected section of the target video based on the content event information; and
generating (S250, S760, S860) a first extracted video based on the target video and information about the selected section.

2. The computer-implemented video generating method of claim 1, wherein the obtaining the target video includes obtaining the target video from a relay server while the target video is transmitted from a streamer terminal (200) to one or more viewer terminals (300-1, 300-2, ... 300-N) through the relay server.

3. The computer-implemented video generating method of claim 1 or 2, wherein the obtaining the first frame information includes:
transmitting (S310) the frame images to be inference targets, session identification information of the session through which the target video is transmitted, and timestamps corresponding to the frame images to be the inference targets to a first event queue; and
obtaining (S320) the frame images, the session identification information and the timestamps stored in the first event queue as first frame information.

4. The computer-implemented video generating method of claim 3, wherein the transmitting to the first event queue includes transmitting to the first event queue a frame image corresponding to an I-frame and selected as an inference target with a predetermined probability among the plurality of frame images, the session identification information and a timestamp corresponding to the selected frame image.

5. The computer-implemented video generating method of any of the previous claims, wherein the frame images corresponding to the first frame information include I-frame images grouped based on the session identification information of the session through which the target video is transmitted.

6. The computer-implemented video generating method of any of the previous claims, wherein the obtaining the content event information includes:
transmitting (S410) session identification information and a timestamp corresponding to a frame image selected based on inferred values of the inference model for the input frame images to a second event queue; and
obtaining (S420) the session identification information and the timestamp stored in the second event queue as content event information.

7. The computer-implemented video generating method of any of the previous claims, wherein the generating the first extracted video includes:
specifying (S510) the target video based on the session identification information included in the content event information; and
among frame images included in the specified target video, generating (S520) the first extracted video using frame images belonging to a predetermined time section including timepoints of timestamps included in the content event information,
wherein the generating the first extracted video using the frame images belonging to the predetermined time section includes generating the first extracted video using frame images belonging to a time section that is set based on event identification information included in the content event information while including the timepoints of the timestamps included in the content event information.

8. The computer-implemented video generating method of any of the previous claims, wherein the generating the first extracted video includes,
regarding identical session identification information included in the content event information, if a content event occurs at a second timepoint within a predetermined period of time after a content event occurs at a first timepoint,
if no additional content event occurs within a predetermined period of time after the content event occurs at the second timepoint, generating the first extracted video using frame images belonging to a time section including the first timepoint and the second timepoint, and
if a content event occurs at a third timepoint within a predetermined period of time after the content event occurs at the second timepoint, determining whether an additional content event occurs within a predetermined period of time based on the third timepoint.

9. The computer-implemented video generating method of any of the previous claims, further comprising applying (S720) a retention period to the plurality of frame images included in the target video and storing the frame images in a storage,
wherein the first extracted video is generated using at least some of the frame images stored in the storage.

10. The computer-implemented video generating method of any of the previous claims, wherein the inference model receives frame images included in each of a plurality of different target videos in batch form and infers whether each frame image is a frame image suitable for serving as reference for video extraction.

11. The computer-implemented video generating method of any of the claims 1 to 9, wherein the inference model individually receives one or more frame images included in one target video and infers whether each frame image is a frame image suitable for serving as reference for video extraction.

12. The computer-implemented video generating method of any of the previous claims, wherein the inference model includes:
a first sub-inference model that receives frame images included in each of a plurality of different target videos in batch form and firstly infers whether each frame image is a frame image that is suitable for reference for video extraction; and
a second sub-inference model that receives a frame image determined to be reference for video extraction according to a result of first inference by the first sub-inference model, individually for each target video, and secondly infers whether each frame image is a frame image that is suitable for serving as reference for video extraction.

13. The computer-implemented video generating method of any of the previous claims, wherein the inference model includes:
a text conversion module that converts each of one or more texts defined in relation to a content event into a first embedding vector;
an image conversion module that converts a frame image that is input to the inference model into a second embedding vector;
a correlation degree calculation module that calculates correlation degrees between the each first embedding vector and the second embedding vector; and
an output module in which, if a correlation degree that is higher than or equal to a threshold correlation degree that is set for each of the one or more texts is present among the calculated correlation degrees, an inferred value indicating at least one of frame images corresponding to the correlation degree that is higher than or equal to the threshold correlation degree is output.

14. An apparatus, comprising:
an input/output interface (101);
a memory (103) for storing instructions; and
a processor (105),
wherein the processor (105), connected to the input/output interface (101) and the memory (103), is configured to:
obtain a target video including a plurality of frame images;
obtain first frame information about at least some frame images to be inference target among the plurality of frame images;
input frame images corresponding to the first frame information into an inference model to obtain content event information for extracting a video with respect to the target video;
obtain information about a selected section of the target video based on the content event information; and
generate a first extracted video based on the target video and information about the selected section.

15. A video processing system comprising:
a relay server configured to receive from a streamer terminal (200) a target video including a plurality of frame images that is transmitted through a session established between two or more terminals (200, 300-1, 300-2, ... 300-N), and that transmits the target video to a video processing server or a storage;
a video processing server (100) configured to receive the target video from the relay server, obtains first frame information about at least some frame images to be inference target among the plurality of frame images, inputs frame images corresponding to the first frame information into an inference model to obtain content event information for extracting a video with respect to the target video, obtains information about a selected section of the target video based on the content event information, and generates a first extracted video based on the target video and information about the selected section; and
a storage configured to receive the target video from the relay server and stores the target video by applying a retention period to the plurality of frame images included in the target video.
